# EUROPÄISCHE PATENTSCHRIFT

(11) **EP 3 839 277 B1**
(45) Veröffentlichungstag und Bekanntmachung des Hinweises auf die Patenterteilung: **08.06.2022**
(21) Anmeldenummer: 20214162.8
(22) Anmeldetag: 15.12.2020
(51) Int. Cl.: F16B 45/00, F16B 39/10

(54) **ANSCHLUSSVORRICHTUNG ZUM ANKOPPELN EINER LAST AN EINE TRAGÖSE MITTELS EINES TRAGBOLZENS**
CONNECTING DEVICE FOR COUPLING A LOAD TO A LUG BY MEANS OF A SUPPORT BOLT
DISPOSITIF DE LIAISON PERMETTANT D'ACCOUPLER UNE CHARGE À UN OEILLET AU MOYEN D'UN BOULON PORTEUR

(30) Priorität: 19.12.2019 DE 102019135324
(43) Veröffentlichungstag der Anmeldung: 23.06.2021
(73) Patentinhaber: Pewag Austria GmbH, 8605 Kapfenberg (AT)
(72) Erfinder: IVANIC, Ranko, 8600 Bruck an der Mur (AT)
(74) Vertreter: Patentanwälte Geyer, Fehners & Partner mbB

(56) Entgegenhaltungen:
- AT-U1- 13 457
- JP-A- 2007 162 868

## Beschreibung

Die Erfindung bezieht sich auf eine Anschlussvorrichtung zum Ankoppeln einer Last an eine Tragöse mittels eines Tragbolzens, wobei der Tragbolzen um seine Längsachse verdrehbar in einer Durchstecköffnung eines Ringhalters sitzt, einen Gewindeschaft sowie einen diesen radial überragenden Bolzenkopf aufweist und auch bei angekoppelter Last zusammen mit dieser relativ zur Tragöse verdrehbar ist.

Solche Anschlussvorrichtungen, bei denen ein Tragbolzen mit einem Gewindeschaft zum Ankoppeln einer aufzunehmenden Last durch eine Durchstecköffnung eines an der Tragöse angebrachten oder mit dieser verbindbaren Verbindungsteils hindurchgeführt ist, sind in vielen unterschiedlichen Anordnungen bekannt und werden auch häufig eingesetzt.

So wird in der EP 2 646 698 B1 eine solche Anschlussvorrichtung in Form einer Ringschraube beschrieben, bei welcher die Durchstecköffnung für den Tragbolzen in einem an der Tragöse selbst ausgebildeten Verbindungsteil vorgesehen ist, auf dessen Oberseite der Bolzenkopf des Tragbolzens sich mit seiner Unterseite auf eine um die Durchstecköffnung herum verlaufende Anlagefläche des Verbindungsteils abstützt. Dabei ist mindestens ein Sperrglied vorgesehen, das mit dem Bolzenkopf in bzw. außer Eingriff bringbar ist und diesen in einer Sperrstellung drehblockiert, während er in der anderen Stellung wieder freigegeben wird. Durch diese Sperrglieder, für deren Betätigung kein getrenntes Werkzeug mehr einzusetzen ist, lässt sich eine sehr platzsparende Anordnung erreichen, wegen der eine Benutzung dieser bekannten Anschlussvorrichtung auch bei nur einem engen vorhandenen Raum möglich ist. Dabei können durch solche Sperrglieder auch relativ große Drehmomente von der Tragöse in Drehrichtung des Tragbolzens übertragen werden.

Allerdings ist es bei dieser bekannten Anschlussvorrichtung nicht möglich, in die Tragöse geschlossene Anschlagmittel (wie etwa eine Seilschlaufe, eine Textilschlaufe o. ä.) einzuhängen. Zudem kann bei dieser bekannten Ringschraube eine Ausrichtung des Tragbolzens in Lastrichtung bei Drehblockierung des Bolzenkopfes durch das mindestens eine in seiner Sperrstellung befindliche Sperrglied nicht erfolgen, so dass diese Ringschraube bei ihrer Anwendung möglicherweise nicht ganz eingeschraubt werden oder gar sich selbst ausschrauben kann.

Bei anderen bekannten Anschlussvorrichtungen (US 7 114 872 B2, EP 0 462 963 B1) werden Tragösen in Form eines offenen Ringes eingesetzt, dessen Endbereiche aufeinander zu ausgerichtet sind und jeweils in eine in einem Ringhalter, in dem die Durchstecköffnung für den Tragbolzen ausgebildet ist, seitlich der Durchstecköffnung befindliche Öffnung eingreifen. Bei diesen Anordnungen kann durch Entfernen des Ringhalters und des Tragbolzens die Tragöse in Form eines offenen Ringes freigelegt werden, um geschlossene Anschlagmittel einzuhängen und danach wieder die fertige Gesamtanordnung zu montieren. Dabei sind diese bekannten Anschlussvorrichtungen jedoch von einem relativ komplizierten Gesamtaufbau, weshalb der Aufbau und der Einbau des Ringhalters mit dem Tragbolzen recht kompliziert und schwierig und somit aufwendig ist.

Bei am Tagbolzen montierter Last wird bei diesen Anschlussvorrichtungen die an der Tragöse gehaltene Anordnung des in einem Ringhalter angebrachten Tragbolzens infolge der Verwendung von zueinander drehbaren Teilen so ausgeführt, dass der Tragbolzen auch bei angeschraubter Last relativ zur Tragöse um seine Mittelachse verdrehbar ist und damit eine Ausrichtung des Tragbolzens in Lastrichtung ermöglicht wird. Dabei kann es jedoch bei Ankopplung schwerer Lasten am Tragbolzen bei Ausrichtbewegungen zum Auftreten großer Reibkräfte zwischen aufeinander gleitenden Teilen kommen, was die Gefahr eines unerwünschten Verschleißes in sich trägt. Beim Einwirken eines Drehmomentes auf die Tragöse entgegen der Einschraubbewegung des Tragbolzens kann dies in bestimmten Situationen auch dazu führen, dass der Tragbolzen sogar in Aufschraubrichtung gedreht wird.

Eine Anschlussvorrichtung der eingangs genannten Art ist aus der DE 43 36 779 A1 bekannt.

Bei dieser Anschlussvorrichtung sitzt der Bolzenkopf des Tragbolzens in einer Vertiefung eines Ringhalters, der seinerseits drehbar an einem Anschlussteil gelagert ist, über das er an einer Tragöse verschwenkbar angelenkt ist. Dabei ist der Ringhalter im Bereich axial oberhalb des Bolzenkopfes über ein Kugellager mit dem Anschlussteil verbunden. Dadurch kann bei angehängter Last über die relative Verdrehbarkeit des Ringhalters gegenüber dem Anschlussteil eine Ausrichtung des Tragbolzens in Lastrichtung erfolgen, wobei die auftretenden Reibkräfte nur relativ gering sind. Allerdings lässt sich bei dieser bekannten Anschlussvorrichtung eine Montage an der aufzunehmenden Last ohne Werkzeug nicht durchführen, da hierfür während des Einschraubvorgangs eine formschlüssige Verbindung zwischen dem Bolzenkopf und dem Anschlussteil hergestellt werden muss. Außerdem ist auch der Einbau eines geschlossenen Anschlagmittels nicht möglich. Eine weitere Anschlussvorrichtung nach dem Stand der Technik zeigt die JP 2007 162868 A.

Ausgehend hiervon stellt die Erfindung darauf ab, eine solche Anschlussvorrichtung derart weiterzubilden, dass sie bei einem besonders einfachen Aufbau insbesondere eine werkzeuglose Montage an der aufzunehmenden Last gestattet und auch der Einbau geschlossener Anschlagmittel einfach und rasch durchführbar ist.

Zu diesem Zweck wird bei einer Anschlussvorrichtung der eingangs genannten Art vorgesehen, dass
- der Ringhalter an seiner Unterseite von einem am unteren Ende einer um den Tragbolzen verdrehbaren, an diesem durch Zug in Axialrichtung lösbar befestigten Hülse radial vorspringenden Endflansch abgedeckt ist,
- am Ringhalter mindestens ein mit dem Bolzenkopf in Eingriff bringbares Sperrglied vorgesehen ist, das in eine Sperrstellung und in eine Ausgangsstellung verbringbar ist, wobei es in der Sperrstellung den Bolzenkopf gegenüber dem Ringhalter drehblockiert und in der Ausgangsstellung mit dem Bolzenkopf nicht in Eingriff steht,
- der Tragbolzen in der Durchstecköffnung des Ringhalters über ein Kugellager gelagert ist, und
- die Tragöse als ein offener Ring ausgebildet ist, dessen beide Endbereiche jeweils in Richtung aufeinander zu verlaufen und im montierten Zustand an einander gegenüberliegenden Seiten in an der Unterseite des Ringhalters ausgebildete, jeweils in diesen nach unten hin offene Ausnehmungen radial einlaufen.

Die Anschlussvorrichtung nach der Erfindung weist zunächst einen relativ einfachen Aufbau auf, der ein rasches Entfernen des Ringhalters mit Tragbolzen und Sperrgliedern von den beiden Endbereichen der Tragöse gestattet.

Im montierten Zustand bildet die erfindungsgemäße Anschlussvorrichtung, auch wenn sie an keine aufzunehmende Last angekoppelt ist, eine in sich geschlossene Einheit, wobei die Unterseite des Ringhalters von dem radial vorspringenden Endflansch der Hülse, die am Tragbolzen lösbar befestigt und um diesen verdrehbar ist, radial abgedeckt wird. In diesem Zustand können die beiden Endbereiche der als offener Ring ausgebildeten Tragöse, die an einander gegenüberliegenden Seiten in dort ausgebildete, nach unten hin offene Ausnehmungen am Ringhalter einlaufen, von dem radial vorspringenden Endflansch der Hülse abgedeckt werden, so dass sie aus diesen offenen Ausnehmungen nicht nach unten hin austreten können.

Soll nun aber ein geschlossenes Anschlagmittel in die Tragöse eingehängt werden, ist es nur erforderlich, die am Tragbolzen durch Zug in Axialrichtung lösbar befestigte Hülse mit ihrem Endflansch vom Tragbolzen nach unten hin abzuziehen und zu entfernen, wodurch dann die offenen Ausnehmungen an dem Ringhalter, in welchem die Endbereiche der Tragöse aufgenommen sind, nunmehr nach unten hin offen sind. In diesem Zustand kann der Ringhalter zusammen mit dem Tragbolzen von diesen Endbereichen der Tragöse nach oben hin abgezogen und dann ebenfalls entfernt werden.

In die verbleibende Tragöse mit deren nunmehr offenem Abschnitt zwischen ihren beiden Endbereichen kann nun das gewünschte geschlossene Anschlagmittel in den Innenbereich der von der Tragöse umschlossenen Fläche eingeführt, anschließend wieder der Ringhalter samt Tragbolzen mit seinen beiden unteren offenen Ausnehmungen auf die Endbereiche der Tragöse aufgesetzt und durch anschließendes Aufstecken der Hülse mit ihrem radial vorspringenden Endflansch von unten am Tragbolzen bis zu ihrer erneuten (lösbaren) Befestigung in ihrer Montagestellung am Tragbolzen hochgeschoben werden, so dass dann wieder der ursprüngliche zusammengebaute Zustand der gesamten Anschlussvorrichtung erreicht ist, wobei nunmehr allerdings in die Tragöse das gewünschte geschlossene Anschlagmittel eingehängt ist.

Durch das Anbringen von mindestens einem mit dem Bolzenkopf in Eingriff bringbaren Sperrglied am Ringhalter, das in eine Sperrstellung wie auch in eine Ausgangsstellung verbringbar ist, in welcher es mit dem Bolzenkopf nicht mehr in Eingriff steht, und für dessen Betätigung kein getrenntes Werkzeug mehr erforderlich ist, kann die erfindungsgemäße Anschlussvorrichtung durch Verbringen des mindestens einen Sperrgliedes in dessen Sperrstellung durch Verdrehen der Tragöse zum Anschließen einer aufzunehmenden Last mit dem Tragbolzen in eine in dieser angebrachte Gewindebohrung eingeschraubt oder durch eine Aufnahmebohrung dort hindurchgesteckt und am freien Ende des Tragbolzens mittels einer Mutter gegen die Last verspannt werden. Dabei ist auch das Einleiten relativ großer Drehmomente von der Tragöse in Drehrichtung des Tragbolzens ohne weiteres möglich.

Durch die Lagerung des Tragbolzens mittels eines Kugellagers direkt in der Durchstecköffnung des Ringhalters wird erreicht, dass dann, wenn der Tragbolzen in der Durchstecköffnung nicht durch das mindestens eine Sperrglied drehblockiert ist, eine sehr leichte Verdrehung des Tragbolzens im Ringhalter und damit bei angehängter Last auch eine leichte Ausrichtung des Tragbolzens in Lastrichtung erfolgen kann.

Bei der Ausbildung des mindestens einen Sperrgliedes am Ringhalter wird ganz besonders bevorzugt dieses als ein Kipphebel ausgebildet, der von der Bedienungsperson ohne Probleme manuell verkippt werden kann.

Die Ausgestaltung des Tragbolzens kann in jeder geeigneten Art und Weise erfolgen, wobei der Bolzenkopf aber besonders bevorzugt in Draufsicht in einer Sechskantform ausgebildet ist.

Es ist weiterhin der Tragbolzen bevorzugt in seinem Bereich zwischen Unterseite des Bolzenkopfes und Beginn seines Gewindeschaftes über das Kugellager in der Durchstecköffnung des Ringhalters gelagert. Dabei ist vorteilhafterweise der Tragbolzen mit einer Führungsrille versehen, in der die Kugeln des Kugellagers laufen.

Eine besonders bevorzugte Ausgestaltung der erfindungsgemäßen Anschlussvorrichtung besteht auch darin, dass im montierten Zustand für die durch Zug in Axialrichtung lösbare Befestigung zwischen Tragbolzen und Hülse zur Verbindung zwischen beiden ein Sprengring eingesetzt wird, der bevorzugt über am Schaft des Tragbolzens an einer Radialwulst dort angebrachte Anlaufschrägen sowohl beim axialen Aufschieben der Hülse auf den Schaft, wie auch beim axialen Abziehen der Hülse von diesem jeweils entsprechend in eine an der Innenseite der Hülse für ihn angebrachte, umlaufende Aufnahmenut hinein gespreizt wird, wodurch der Sprengring in einer folgenden axialen Relativbewegung zwischen Hülse und Tragbolzen über die Radialwulst am Tragbolzenschaft bis zum Erreichen einer Befestigungsstellung hinter der Radialwulst bzw. zur Freigabe der Befestigungsstellung bei einer axialen Zugkraft hinweggeführt werden kann. Die dabei einzusetzenden axialen Zugkräfte sind so gering, dass sie in der Regel unschwer manuell aufbringbar sind.

Durch die Erfindung wird eine Anschlussvorrichtung geschaffen, die bei einem ganz überraschend einfachen Aufbau auch bei angehängter Last eine leichte Ausrichtung des Tragbolzens in Lastrichtung zulässt. Außerdem ist es ohne ein Werkzeug möglich, den Tragbolzen über den Bolzenkopf am Ringhalter in Drehrichtung zu blockieren, wobei durch das eingesetzte mindestens eine Sperrglied über die Tragöse relativ große Drehmomente auf den Tragbolzen übertragen werden können.

Die Verwendung einer am Tragbolzen im montierten Zustand befestigten Hülse, deren Befestigung an diesem durch Zug in Axialrichtung lösbar ist und die mittels eines an ihrem unteren Ende vorspringenden Endflansches die Unterseite des Ringhalters abdeckt, lässt im montierten Zustand eine in sich geschlossene Ausbildung der erfindungsgemäßen Anschlussvorrichtung erreichen. Dabei kann über die Drehblockierung des Tragbolzens in der Sperrstellung des mindestens einen Sperrgliedes direkt ein Einschrauben des Gewindeschaftes des Tragbolzens in ein entsprechendes in der aufzunehmenden Last ausgebildetes Aufnahmegewinde oder ein Hindurchstecken des Tragbolzens durch eine Durchstecköffnung in der Last und das Aufschrauben einer Haltemutter am auf der Gegenseite der Last überstehenden Endbereich des Tragbolzens vorgenommen werden, ohne dass dabei irgendwelche Werkzeuge eingesetzt werden müssten.

Die Erfindung wird nachfolgend anhand der Zeichnungen im Prinzip beispielshalber noch näher erläutert. Es zeigen:
- Fig. 1: eine perspektivische Gesamtansicht einer erfindungsgemäßen Anschlussvorrichtung mit zwei Sperrgliedern für den Kopf des Tragbolzens, die sich nicht in Sperrstellung befinden;
- Fig. 2: einen Schnitt durch die Anschlussvorrichtung der Fig. 1, wobei die Schnittebene in der Aufspannebene der Mittelachse der Tragöse liegt;
- Fig. 3: einen Schnitt durch die Anordnung gemäß Fig. 2 entsprechend Schnittlage A - A;
- Fig. 4: die Anschlussvorrichtung aus Fig. 1, jedoch mit nach unten abgezogener Hülse und nach oben von den beiden Endbereichen der Tragöse angehobenem Ringhalter;
- Fig. 5: eine vergrößerte Perspektivdarstellung des Tragbolzens mit axial nach unten abgezogener Hülse;
- Fig. 6: eine vergrößerte Schnittdarstellung eines Detailausschnitts der Hülse mit Sprengring beim axialen Aufschieben auf den Tragbolzen vor Erreichen einer Befestigungsendstellung, sowie
- Fig. 7: eine Schnittdarstellung entsprechend Fig. 6, bei der die Hülse jedoch ihre Montageendstellung am Tragbolzen erreicht hat.

In der folgenden Figurenbeschreibung ist ein Ausführungsbeispiel einer erfindungsgemäßen Anschlussvorrichtung dargestellt, wobei gleiche Bezugszeichen in unterschiedlichen Figuren stets gleiche Teile bezeichnen.

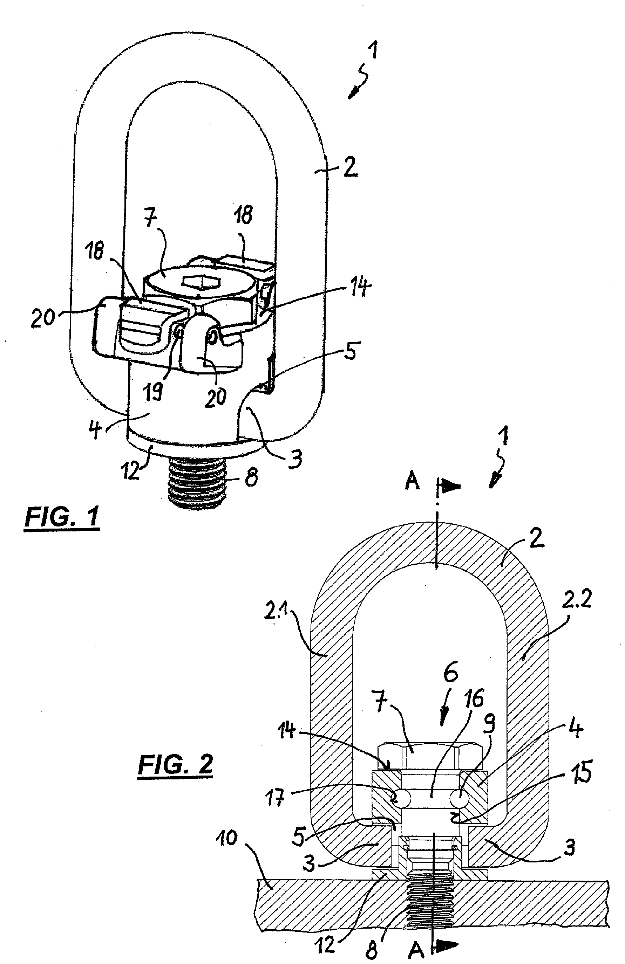

In Fig. 1 ist eine perspektivische Seitenansicht einer erfindungsgemäßen Anschlussvorrichtung 1 im zusammengebauten Zustand und in Fig. 2 ein Schnitt durch diese Anschlussvorrichtung 1 aus Fig. 1 gezeigt, wobei die Schnittebene parallel zur Aufspannebene der Tragöse 2 und durch die Drehachse des Tragbolzens verlaufend liegt.

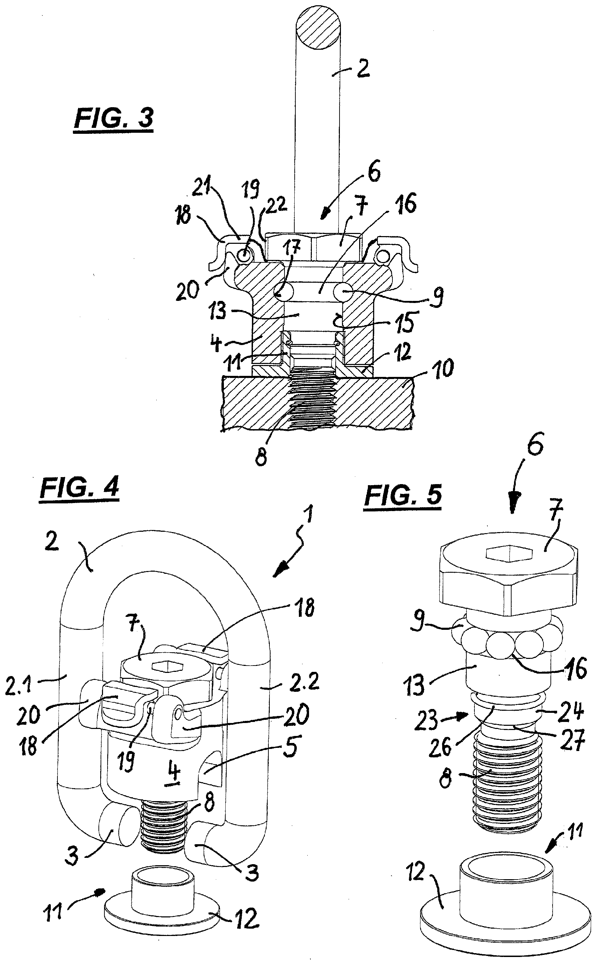

Fig. 3 stellt schließlich noch einen Schnitt längs Schnittlage ***A -A*** (gemäß Fig. 2) dar.

Wie insbesondere der Schnitt aus Fig. 2 zeigt, ist die Tragöse 2, an welcher die ganze Anschlussvorrichtung 1 mit angekoppelter Last 10 an eine geeignete Hebevorrichtung angeschlossen werden kann, in Form eines offenen Ringes ausgebildet.

Die beiden Endbereiche 3 der Tragöse 2, zwischen denen sich die offene Ringstelle befindet, sind so ausgebildet, dass sie jeweils von einem der beiden Seitenschenkel 2.1 bzw. 2.2 der Tragöse 2 in Richtung aufeinander zu abgebogen sind, so wie dies in Fig. 2 (oder auch in der Darstellung der Fig. 4) im Einzelnen gezeigt ist, worauf verwiesen wird. Bei dem gezeigten Ausführungsbeispiel verläuft dabei die Abbiegung der Endbereiche 3 von dem jeweiligen Seitenschenkel 2.1 bzw. 2.2 so, dass diese Endbereiche 3 senkrecht zu den Seitenschenkeln 2.1 und 2.2 liegen. Dabei ist die Ausbildung der Endbereiche 3 so ausgeführt, dass sie symmetrisch zu der Längsachse der Tragöse 2 ausgerichtet sind, die in der in Fig. 2 eingezeichneten Schnittlage ***A - A*** liegt.

Die Anschlussvorrichtung 1 umfasst ferner einen Ringhalter 4, der an seiner Unterseite einander diametral gegenüberliegend zwei nach unten hin offene Ausnehmungen 5 aufweist, in deren jede im montierten Zustand einer der Endbereiche 3 der Tragöse 2 radial einläuft. Hierzu wird auf die Darstellungen der Fig. 2 und der Fig. 4 besonders verwiesen.

Dabei ist jede der Ausnehmungen 5 im Querschnitt etwas größer als der Querschnitt des hineinragenden Endbereichs 3 der Tragöse 2 ausgebildet.

Im Ringhalter 4 ist ferner zentral eine axial durch diesen hindurchlaufende Durchstecköffnung 15 vorgesehen, in der ein Tragbolzen 6, um seine Längsachse verdrehbar, sitzt.

Der Tragbolzen 6 weist oben einen Bolzenkopf 7 und, in einem axialen Abstand von diesem, einen Gewindeschaft 8 auf, der im zusammengebauten Zustand der Anschlussvorrichtung 1 auf der Unterseite des Ringhalters 4 um eine vorgegebene Länge axial vorsteht, wie dies Fig. 1 zeigt.

An den Bolzenkopf 7 schließt sich, innerhalb der Durchstecköffnung 15, ein gewindefreier Abschnitt 13 des Tragbolzens 6 an, innerhalb dessen der Tragbolzen 6 in der Durchstecköffnung 15 des Ringhalters 4 über ein Kugellager 9 gelagert und gehaltert ist.

Die Anschlussvorrichtung 1 umfasst ferner auch noch eine Hülse 11, die von der Unterseite des Gewindeschaftes 8 her auf diesen axial aufgesteckt ist und an ihrem unteren Ende einen radial vorspringenden Endflansch 12 aufweist, dessen Durchmesser so groß ist, dass er im voll aufgesteckten Zustand der Hülse 11 die Unterseite des Ringhalters 4 überdeckt und dabei auch die beiden Ausnehmungen 5 unten am Ringhalter 4 abdeckt, so dass die dort eingesteckten Endbereiche 3 der Tragöse 2 nicht mehr aus den Ausnehmungen 5 herausbewegt werden können.

An der Oberseite des Ringhalters 4 ist eine die Durchstecköffnung 15 umlaufende Fläche 14 vorgesehen, die bei montiertem Tragbolzen 6 einen sehr geringen Abstand zur Unterseite des Bolzenkopfes 7 aufweist. Der Tragbolzen 6 ist mit dem Ringhalter 4 über das Kugellager 9 verbunden, dessen Kugeln teilweise in einer Führungsrille 16, die am gewindefreien Abschnitt 13 des Tragbolzens 6 ausgebildet ist, und teilweise in einer zugeordneten Aufnahmenut 17, die in der Durchstecköffnung 15 am Ringhalter 4 vorgesehen ist, aufgenommen werden.

Da durch das Kugellager 9 der Tragbolzen 6 nicht nur in der Durchstecköffnung 15 des Ringhalters 4 verdrehbar gelagert, sondern mit dem Ringhalter 4 auch verbunden ist, sichert ein geringer Spalt zwischen der Unterseite des Bolzenkopfes 7 und der Fläche 14 oben am Ringhalter 4 eine leichte Verdrehbarkeit des Tragbolzens 6 relativ zum Ringhalter 4 mit nur geringen Reibkräften, wenn der Bolzenkopf 7 des Tragbolzens 6 nicht drehblockiert ist.

Wie aus den Darstellungen der Fig. 1, 3 und 4 erkennbar ist, sind an der Oberseite des Ringhalters 4 beidseits des Bolzenkopfes 7, der in Form eines Sechskants ausgebildet ist, zwei einander gegenüberliegende Sperrglieder in Form von Kipphebeln 18 angebracht, die symmetrisch zur Aufspannebene der Innenöffnung der Tragöse 2 liegen. Wie aus den Figuren ersichtlich ist, sitzt jeder dieser Kipphebel 18 auf einer Drehachse 19, die zu beiden Seiten des Kipphebels 18 jeweils über einen Lagerblock 20 mit dem Ringhalter 4 verbunden ist.

Dabei ist die Anordnung der Kipphebel 18 und der Lagerblöcke 20 so ausgebildet, dass jeder Kipphebel 18, wenn er aus seiner (in den Fig. 1, 3 und 4 dargestellten) Ausgangslage nach innen in Richtung zum Bolzenkopf 7 hin verschwenkt wird, dort eine Sperrstellung einnimmt, in welcher er mit einer zugeordneten Seitenfläche 22 des Sechskants des Bolzenkopfes 7 in Wirkverbindung tritt, indem er sich mit seinem dortigen Hebelschenkel 21 gegen diese Seitenfläche 22 des Sechskants des Bolzenkopfes 7 anlegt. Damit wird eine Sperrstellung des Kipphebels 18 erreicht, in welcher die in Drehrichtung liegende Endfläche des Hebelschenkels 21 gegen die Oberfläche 14 am Ringhalter 4 anliegt.

Auf diese Weise kann durch Verkippen der Kipphebel 18 nach innen zum Bolzenkopf 7 hin durch Ausbilden dieser Sperrstellung eine Drehblockierung des Tragbolzens 6 erreicht werden, was ohne Schwierigkeit manuell durchführbar ist.

Erst wenn die Kipphebel 18 wieder in ihre nach außen verklappte Ausgangsstellung verkippt werden, wie sie in den Fig. 1, 3 und 4 gezeigt ist, ist der Bolzenkopf 7 wieder in Drehrichtung freigegeben und kann dann relativ zum Ringhalter 4 über das Kugellager 9 verdreht werden.

In Fig. 5 ist eine vergrößerte Darstellung des Tragbolzens 6 in ausgebautem Zustand gezeigt, wobei dort unterhalb des Gewindeschaftes 8 auch noch die auf diesen aufschiebbare Hülse 11 mit ihrem unteren kreisförmigen, radial erweiterten Endflansch 12 gezeigt ist.

Wie aus Fig. 5 entnehmbar, schließt sich an die Unterseite des Bolzenkopfes 7 der gewindefreie Abschnitt 13 des Tragbolzens 6 an, der, etwas oberhalb der Mitte seiner axialen Länge, mit der Führungsrille 16 versehen ist, in welche die Kugeln des Kugellagers 9 mit ihrer einen Hälfte eingreifen: In Fig. 5 sind die Kugeln des Kugellagers 9 in diesem Eingriffszustand gezeigt, wobei ihre andere, radial äußere Hälfte in eine Aufnahmenut 17, die in der Durchstecköffnung 15 des Ringhalters 4 ausgebildet ist, aufgenommen sind (Fig. 4).

Zwischen diesem gewindefreien Abschnitt 13 des Tragbolzenschafts und dem an dessen axialen Endbereich angebrachten Gewindeschaft 8 befindet sich ein Schaftabschnitt 23 verringerten Durchmessers, an den sich dann der Gewindeschaft 8 axial anschließt (Fig. 5).

Wie bereits erwähnt, wird für den zusammengebauten Zustand der erfindungsgemäßen Anschlussvorrichtung 1, wie er etwa in den Fig. 1 und 2 gezeigt ist, die Hülse 11 vom freien Ende des Gewindeschaftes 8 her über diesen axial verschoben, bis sie eine Befestigungsstellung eingenommen hat.

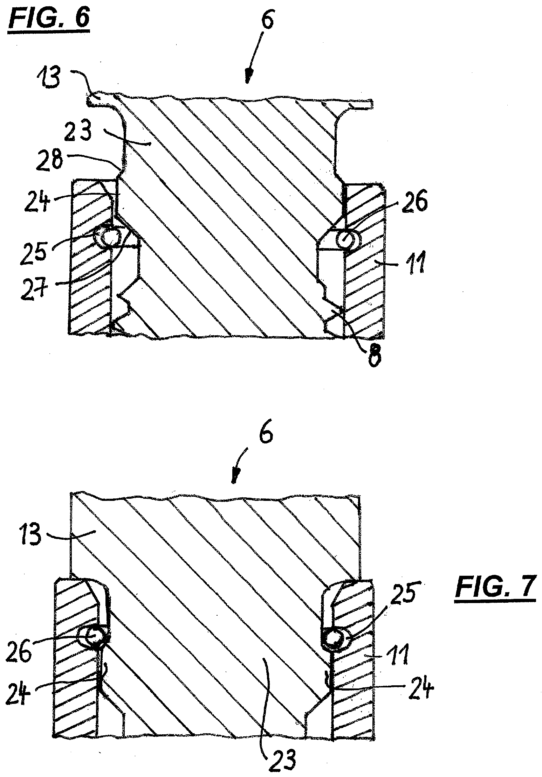

Hierzu wird nun auf die Darstellungen der Fig. 6 und 7 verwiesen, welche eine vergrößerte, geschnittene Detaildarstellung eines Abschnitts des Tragbolzens 6 und der auf ihn hochgeschobenen Hülse 11 zeigen, wobei in Fig. 6 die Hülse 11 zwar über den Gewindeschaft 8 bereits hochgeschoben ist, jedoch ihre Befestigungsendstellung noch nicht erreicht hat.

In Fig. 7 ist nun der Zustand gezeigt, in welchem die Hülse 11 sich in ihrem ganz auf den Schaft des Tragbolzens 6 hochgeschobenen Zustand befindet, in dem sie ihre Befestigungsstellung mit dem Tragbolzen 6 erreicht hat.

Wie aus den Fig. 6 und 7 ersichtlich, ist im Bereich des Schaftabschnitts 23, der sich zwischen dem gewindefreien Abschnitt 13 und dem Gewindeschaft 8 erstreckt, eine radial erweiterte Ringwulst 24 am Schaftabschnitt 23 ausgebildet, deren Außenumfang einen radialen Durchmesser hat, der etwas kleiner als der Innendurchmesser der Hülse 11 ausgebildet ist.

An der Innenfläche der Hülse 11 ist eine ringförmig umlaufende Aufnahmenut 25 ausgebildet, in welcher ein Sprengring 26 sitzt und dabei nur soweit in die Aufnahmenut 25 hineinragt, dass er in dieser in seinem entspannten Zustand in axialer Richtung gehalten ist. Dabei ist der Querschnitt der Aufnahmenut 25 in Richtung deren radialer Erstreckung in der Wand der Hülse 11 jedoch so groß ausgebildet, dass der Sprengring 26 bei einer radialen Aufdehnung vollständig in der Aufnahmenut 25 so aufgenommen werden kann, dass er nicht mehr radial aus dieser in die Innenöffnung der Hülse 11 hineinragt.

Die Wulst 24 ist an ihrer dem Gewindeschaft 8 zugewandten Seite mit einer umlaufenden, in axialer Richtung schräg zur axialen Mittelachse des Tragbolzens 6 verlaufenden Anlaufschräge 27 versehen, die von einer Stelle eines radial kleineren Durchmessers in einem Abstand vom Gewindeschaft 8 schräg bis zu einer Stelle größeren Durchmessers, nämlich bis zum Beginn der radialen Außenfläche der Wulst 24, verläuft, wie dies aus den Fig. 5 und 6 ersichtlich ist.

An dem axialen gegenüberliegenden, dem gewindefreien Abschnitt 13 zugewandten axialen Ende der Wulst 24 ist ebenfalls eine Anlaufschräge 28 vorgesehen, die jedoch in entgegengesetzter Richtung zur Anlaufschräge 27 und auch nur über eine kleinere Durchmesserveränderung des Schaftabschnitts 23 hinweg verläuft.

Der an der Innenfläche der Hülse 11 in der Aufnahmenut 25 im entspannten Zustand aufgenommene Sprengring 26 ragt, wie Fig. 6 zeigt, in seinem entspannten Zustand mit etwas weniger als seiner radialen Hälfte in den Innenraum der Hülse 11 vor. Wenn diese nun axial auf den Schaft des Tragbolzens 6 von dessen Unterseite her aufgeschoben wird, kommt der Sprengring 26 zunächst bei der axialen Bewegung der Hülse 11 zur Anlage gegen die Anlaufschräge 27, durch die er, bei Fortsetzung der axialen Relativbewegung zwischen Hülse 11 und Schaftabschnitt 23, radial nach außen aufgespreizt und dabei in die Aufnahmenut 25 radial weiter eingedrückt wird, während er über die radiale Außenfläche der Wulst 24, in Anlage gegen diese, durch die Hülse 11 verschoben wird.

Sobald die Hülse 11 axial so weit verschoben ist, dass der Sprengring 26 an der anderen, gegenläufig schrägen Anlauffläche 28 angekommen ist, federt dieser, bei fortgesetzter axialer Bewegung der Hülse 11, infolge der durch seine Aufspreizung erzeugten elastischen Rückstellkraft wieder radial nach innen, während er auf der Anlaufschräge 28 entlanggleitet.

Dabei ist die Position der Aufnahmenut 25 in der Hülse 11 relativ zum freien Ende derselben so gewählt, dass dann, wenn die Endfläche der Hülse 11 gegen die Unterseite des ihr gegenüber radial vergrößerten, gewindefreien Abschnitts 13 anläuft, der Sprengring 26 wieder soweit radial eingefedert ist, dass er gerade am axialen, radial innen liegenden Ende der Anlaufschräge 28 angekommen ist, wie dies aus Fig. 7 entnommen werden kann.

In diesem Zustand ist die Hülse 11 gegenüber dem Tragbolzen 6 durch Zusammenwirken des eingefederten Sprengrings 26 und der ihm zugewandten Anlaufschräge 28 in einer Befestigungsstellung axial festgelegt, wodurch die Hülse 11 am Tragbolzen 6 gehaltert ist.

Soll nun die Hülse 11 vom Tragbolzen 6 abgezogen werden, ist es nur erforderlich, auf die Hülse 11 einen Zug axial in Richtung vom gewindefreien Abschnitt 13 weg auszuüben. Dieser bewirkt, dass dann der Sprengring 26 durch die Anlaufschräge 28 bei der ausgelösten axialen Bewegung zwischen Hülse 11 und Tragbolzen 6 wieder radial nach außen in die Aufnahmenut 25 aufspreizt, in diesem Zustand über die äußeren Umfangsfläche der Wulst 24 verschoben wird und entlang der folgenden Anlaufschräge 27 am anderen axialen Ende der Wulst 24 wieder elastisch radial einfedert, wodurch keine Sperrstellung zwischen der Hülse 11 und dem Tragbolzen 6 mehr vorliegt und die Hülse 11 dann radial von diesem abgezogen werden kann.

Sowohl das axiale Aufschieben der Hülse 11 auf den Tragbolzen 6, wie auch das axiale Abziehen der aufgeschobenen Hülse 11 von diesem erfordert jeweils nur auf die Hülse 11 wirkende axiale Kräfte, welche das radiale Ausfedern des Sprengrings 26 über die Anlaufschräge 27 oder die Anlaufschräge 28 bewirken können, also relativ geringe Kräfte, die in der Regel auch manuell aufgebracht werden können.

Durch den in den Figuren geschilderten Aufbau ist es nun möglich, bei der zusammengebauten Anschlussvorrichtung 1, wie sie aus den Fig. 1 und 2 hervorgeht, durch ein mit geringen Kräften erfolgendes axiales Abziehen der Hülse 11 von der Unterseite des Ringhalters 4 so, wie in Fig. 4 gezeigt, und durch anschließendes Anheben des Ringhalters 4 mit dem Tragbolzen 6 sowie den Sperrgliedern 18 nach oben hin und Entfernen dieser angehobenen Baueinheit aus dem Innenraum der Tragöse 2 heraus vorzunehmen. Sodann kann durch den Zwischenraum zwischen den dann frei liegenden Endbereichen 3 der Tragöse 2 z. B. ein geschlossenes Anschlagmittel, etwa eine Seilschlaufe o. ä., eingeführt und dann wieder den Ringhalter 4 mit Tragbolzen 6 und Sperrgliedern 18 auf die Endbereiche 3 der Tragöse 2 aufgesetzt werden, so dass diese wieder in die offenen Ausnehmungen 5 des Ringhalters 4 eingreifen. Anschließend wird die Hülse 11 von unten her über den Gewindeabschnitt 8 des Tragbolzens 6 axial hochgeschoben und zwar so weit, bis sie in ihre in Fig. 7 gezeigte Sperrstellung gelangt ist, in der sie dann am Schaft des Tragbolzens wieder gehalten wird.

Dieser Vorgang des Einhängens bzw. Einführens eines geschlossenen Anschlagmittels kann sehr einfach und rasch und mit geringen Kräften durchgeführt werden, so dass anschließend das Anhängen der Tragöse 2 über das geschlossene Anschlagmittel an einer zugeordneten Halte- oder Hebeeinrichtung erfolgen kann.

Im zusammengebauten Zustand ist die Durchstecköffnung 15 im Ringhalter 4 so ausgebildet, dass in dem axialen Bereich, in dem im montierten Zustand die Hülse 11 axial in die Durchstecköffnung 15 hineinragt, ein kleiner radialer Spalt zwischen der Innenfläche der Durchstecköffnung 15 und der Umfangfläche des in letztere hineinragenden axialen Abschnitts der Hülse 11 vorliegt, um eine leichte, reibfreie Relativdrehung zwischen der Hülse 11 und dem Ringhalter 4 zu gewährleisten. In diesem Sinne wird auch ein axialer Ringspalt zwischen der Oberseite des radial vorspringenden Endflansches 12 der Hülse 11 und der axial unteren Abschlussfläche des Ringhalters 4 vorgesehen, wie dies alles in der Schnittdarstellung der Fig. 3 gezeigt ist.

Damit besteht die Möglichkeit, dass sich bei nicht über die Sperrglieder 18 drehblockiertem Tragbolzen 6 eine Verdrehung desselben mit einer am Gewindeschaft 8 angekoppelten Last 10 eine Ausrichtung des Tragbolzens 6 in Lastrichtung gegenüber der Lage der Tragöse 2 erreichen lässt, und dies ohne der Notwendigkeit des Einsatzes von Werkzeugen.

Bei alledem ist die erfindungsgemäße Anschlussvorrichtung 1 von einem vergleichsweise einfachen Aufbau, insbesondere im Hinblick auf die bei ihr gleichzeitig erreichten Vorteile.

## Patentansprüche

1. Anschlussvorrichtung (1) zum Ankoppeln einer Last an eine Tragöse (2) mittels eines Tragbolzens (6), wobei der Tragbolzen (6) um seine Längsachse verdrehbar in einer Durchstecköffnung (15) eines Ringhalters (4) sitzt, einen Gewindeschaft (8) sowie einen diesen radial überragenden Bolzenkopf (7) aufweist und auch bei angekoppelter Last (10) zusammen mit dieser relativ zur Tragöse (2) verdrehbar ist,
**dadurch gekennzeichnet, dass**
- der Ringhalter (4) an seiner Unterseite von einem am unteren Ende einer um den Tragbolzen (6) verdrehbaren, an diesem durch Zug in Axialrichtung lösbar befestigten Hülse (11) radial vorspringenden Endflansch (12) abgedeckt ist,
- am Ringhalter (4) mindestens ein mit dem Bolzenkopf (7) in Eingriff bringbares Sperrglied (18) vorgesehen ist, das in eine Sperrstellung und in eine Ausgangsstellung verbringbar ist, wobei es in der Sperrstellung den Bolzenkopf (7) gegenüber dem Ringhalter (4) drehblockiert und in der Ausgangsstellung mit dem Bolzenkopf (7) nicht in Eingriff steht,
- der Tragbolzen (6) in der Durchstecköffnung (15) des Ringhalters (4) über ein Kugellager (9) gelagert ist, und
- die Tragöse (2) als ein offener Ring ausgebildet ist, dessen beide Endbereiche (3) jeweils in Richtung aufeinander zu abgebogen sind und im montierten Zustand an einander gegenüberliegenden Seiten in an der Unterseite des Ringhalters (4) ausgebildete, jeweils in diesem nach unten hin offene Ausnehmungen (5) radial einlaufen.

2. Anschlussvorrichtung nach Anspruch 1, **dadurch gekennzeichnet, dass** das mindestens eine Sperrglied (18) als Kipphebel ausgebildet ist.

3. Anschlussvorrichtung nach Anspruch 1 oder Anspruch 2, **dadurch gekennzeichnet, dass** der Bolzenkopf (7) in Draufsicht eine Sechskantform ausbildet.

4. Anschlussvorrichtung nach einem der Ansprüche 1 bis 3, **dadurch gekennzeichnet, dass** der Tragbolzen (6) in seinem Bereich zwischen dem Bolzenkopf (7) und dem Beginn seines Gewindeschaftes (8) über das Kugellager (9) am Ringhalter (4) gelagert ist.

5. Anschlussvorrichtung nach Anspruch 4, **dadurch gekennzeichnet, dass** der Tragbolzen (6) mit einer Führungsrille (16) versehen ist, die zur Aufnahme der Kugeln des Kugellagers (9) dient.

6. Anschlussvorrichtung nach einem der Ansprüche 1 bis 5, **dadurch gekennzeichnet, dass** im montierten Zustand die Hülse (11) mit dem Tragbolzen (6) mittels eines Sprengrings (26) verbunden ist.

7. Anschlussvorrichtung nach Anspruch 6, **dadurch gekennzeichnet, dass** der Sprengring (26) im nicht montierten Zustand der Hülse (11) in einer an der Innenfläche der Hülse (11) angebrachten Ringnut (25) sitzt, wobei er im Ruhezustand von dort in den Innenraum der Hülse (11) vorsteht, dass ferner am Schaft des Tragbolzens (6) im Bereich zwischen dessen Bolzenkopf (7) und dem Gewindeschaft (8) eine radial vorstehende Ringwulst (24) ausgebildet ist, die an den beiden Enden ihrer axialen Erstreckung jeweils mit einer Anlaufschräge (27, 28) derart versehen ist, dass beim axialen Aufschieben bzw. Abziehen der Hülse (11) der Sprengring (26) jeweils über eine Anlaufschräge (27; 28) in die Ringnut (25) in der Hülse (11) eingedrückt wird und nach dem Überlaufen der axialen Umfangserstreckung der Ringwulst (24) an der anderen Anlaufschräge (28; 27) elastisch wieder in seinen Ruhezustand radial zurückfedert.

## Claims

1. A connection device (1) for coupling a load to a lifting lug (2) by means of a support bolt (6), wherein the support bolt (6) is located so as to be able to be rotated about the longitudinal axis thereof in a through-opening (15) of a ring holder (4), has a threaded shaft (8) and a bolt head (7) which protrudes radially beyond it and can also be rotated therewith relative to the lifting lug (2) with a coupled load (10),
**characterized in that**
- the ring holder (4) is covered at the lower side thereof by an end flange (12) which radially protrudes at the lower end of a sleeve (11) which can be rotated about the support bolt (6) and which is releasably secured thereto by means of tension in an axial direction,
- there is provided on the ring holder (4) at least one locking member (18) which can be brought into engagement with the bolt head (7) and which can be moved into a locking position and into an initial position, wherein it blocks the bolt head (7) in terms of rotation with respect to the ring holder (4) in the locking position and is not in engagement with the bolt head (7) in the initial position,
- the support bolt (6) is supported in the through-opening (15) of the ring holder (4) by means of a ball bearing (9), and
- the lifting lug (2) is constructed as an open ring, the two end regions (3) of which are each bent in the direction toward each other and in the assembled state at mutually opposing sides run radially into recesses (5) which are formed on the lower side of the ring holder (4) and which are in each case open therein in a downward direction.

2. The connection device as claimed in claim 1, **characterized in that** the at least one locking member (18) is constructed as a tilting lever.

3. The connection device as claimed in claim 1 or claim 2, **characterized in that** the bolt head (7) forms a hexagonal shape when viewed from above.

4. The connection device as claimed in one of claims 1 to 3, **characterized in that** the support bolt (6) in the region thereof between the bolt head (7) and the beginning of the threaded shaft (8) thereof is supported by means of the ball bearing (9) on the ring holder (4).

5. The connection device as claimed in claim 4, **characterized in that** the support bolt (6) is provided with a guiding groove (16) which serves to receive the balls of the ball bearing (9).

6. The connection device as claimed in one of claims 1 to 5, **characterized in that** in the assembled state the sleeve (11) is connected to the support bolt (6) by means of a snap ring (26).

7. The connection device as claimed in claim 6, **characterized in that** the snap ring (26) in the non-mounted state of the sleeve (11) is located in an annular groove (25) which is fitted to the inner face of the sleeve (11), wherein in the rest state it protrudes from there into the inner space of the sleeve (11), **in that** there is further formed on the shaft of the support bolt (6) in the region between the bolt head (7) thereof and the threaded shaft (8) a radially protruding annular bead (24) which is provided at both ends of the axial extent thereof in each case with an inclined starting member (27, 28) such that, when the sleeve (11) is axially pushed on or removed, the snap ring (26) is pressed in each case via an inclined starting member (27; 28) into the annular groove (25) in the sleeve (11) and, after passing over the axial peripheral extent of the annular bead (24) on the other inclined starting member (28; 27), resiliently rebounds again radially into the rest state thereof.

## Revendications

1. Dispositif de raccordement (1) pour l'accouplement d'une charge à un œillet porteur (2) au moyen d'un boulon porteur (6), le boulon porteur (6) étant disposé de manière à pouvoir tourner autour de son axe longitudinal dans une ouverture de passage (15) d'un support annulaire (4), présentant une tige filetée (8) ainsi qu'une tête de boulon (7) dépassant radialement de celle-ci et pouvant tourner conjointement avec celle-ci par rapport à l'œillet porteur (2) même lorsque la charge (10) est accouplée,
**caractérisé en ce que**
- le support annulaire (4) est recouvert sur son côté inférieur par une bride d'extrémité (12) faisant saillie radialement à l'extrémité inférieure d'une douille (11) pouvant tourner autour du boulon porteur (6), fixée à celui-ci de manière amovible par traction dans la direction axiale,
- sur le support annulaire (4), au moins un élément d'arrêt (18) pouvant être mis en prise avec la tête de boulon (7) est prévu, qui peut être mis dans une position d'arrêt et dans une position initiale ; dans la position d'arrêt, celui-ci bloquant en rotation la tête de boulon (7) par rapport au support annulaire (4) et, dans la position initiale, celui-ci n'étant pas en prise avec la tête du boulon (7),
- le boulon porteur (6) est monté dans l'ouverture de passage (15) du support annulaire (4) par l'intermédiaire d'un roulement à billes (9), et
- l'œillet porteur (2) est configuré sous la forme d'un anneau ouvert, dont les deux zones d'extrémité (3) sont respectivement recourbées en direction l'une de l'autre et, à l'état monté, pénètrent radialement, sur des côtés opposés l'un à l'autre, dans des évidements (5) formés sur le côté inférieur du support annulaire (4), respectivement ouverts vers le bas dans celui-ci.

2. Dispositif de raccordement selon la revendication 1, **caractérisé en ce que** l'au moins un élément d'arrêt (18) est configuré sous forme de levier basculant.

3. Dispositif de raccordement selon la revendication 1 ou la revendication 2, **caractérisé en ce que** la tête de boulon (7) présente une forme hexagonale en vue de dessus.

4. Dispositif de raccordement selon l'une quelconque des revendications 1 à 3, **caractérisé en ce que** le boulon porteur (6) est monté dans sa zone entre la tête de boulon (7) et le début de sa tige filetée (8) par l'intermédiaire du roulement à billes (9) sur le support annulaire (4).

5. Dispositif de raccordement selon la revendication 4, **caractérisé en ce que** le boulon porteur (6) est pourvu d'une rainure de guidage (16), qui sert à recevoir les billes du roulement à billes (9).

6. Dispositif de raccordement selon l'une quelconque des revendications 1 à 5, **caractérisé en ce qu'**à l'état monté, la douille (11) est reliée au boulon porteur (6) au moyen d'une bague élastique (26).

7. Dispositif de raccordement selon la revendication 6, **caractérisé en ce que** la bague élastique (26), à l'état non monté de la douille (11), est disposée dans une rainure annulaire (25) pratiquée sur la surface intérieure de la douille (11), à partir de laquelle elle fait saillie dans l'espace intérieur de la douille (11) à l'état de repos, **en ce qu'**en outre est formé sur la tige du boulon porteur (6), dans la zone entre sa tête de boulon (7) et la tige filetée (8), un bourrelet annulaire (24) faisant saillie radialement, qui est pourvu aux deux extrémités de son extension axiale respectivement d'un biais d'attaque (27, 28) de telle sorte que lors de l'enfilement ou du retrait axial de la douille (11), la bague élastique (26) est enfoncée dans la rainure annulaire (25) dans la douille (11) respectivement par l'intermédiaire d'un biais d'attaque (27 ; 28) et, après le dépassement de l'extension périphérique axiale, le bourrelet annulaire (24) revient radialement élastiquement à son état de repos sur l'autre biais d'attaque (28 ; 27).
